# EUROPEAN PATENT APPLICATION

(11) **EP 3 329 820 A1**
(43) Date of publication of application: **06.06.2018**
(21) Application number: 16832648.6
(22) Date of filing: 29.06.2016
(51) Int. Cl.: A47K 11/04

(54) **TOILET, TOILET SEAT, AND TOILET DEVICE**

(30) Priority: 31.07.2015 JP 2015152947; 31.07.2015 JP 2015152948
(71) Applicant: LIXIL Corporation, Koto-ku Tokyo 136-8535 (JP)
(72) Inventor: IMAI, Shigeo, Tokyo 136-8535 (JP); YOSHIZAWA, Hiroshi, Kiyosu-shi Aichi 452-0008 (JP); TAGO, Manabu, Yokohama-shi, Kanagawa 2270046 (JP)
(74) Representative: Algemeen Octrooi- en Merkenbureau B.V.
(86) International application number: PCT/JP2016/069198
(87) International publication number: WO 2017/022369

(57) **Abstract**

A toilet 12 includes a toilet bowl part 20 with a waste discharge hole 26 formed on its bottom part and also includes a valve structure 34 capable of opening and closing the waste discharge hole 26, and the toilet bowl part 20 is formed of a material having flexibility. Accordingly, the toilet bowl part 20 is easily bent by waste brought into the toilet bowl part 20. When the toilet bowl part 20 is bent while waste is accumulated in the bottom part of the toilet bowl part 20, a gradient on an inner surface of the toilet bowl part 20 becomes larger, so that the waste can be easily led to the bottom part of the toilet bowl part 20. Accordingly, waste within the toilet bowl part is less likely to remain, thereby reducing the amount of flush water used to flush the inner surface of the toilet bowl part. Therefore, the toilet 12 can be provided as a toilet suitable for use in an environment where waterworks cannot be used.

## Description

### [TECHNICAL FIELD]

The present invention relates to a toilet, a toilet seat, and a toilet device.

### [BACKGROUND ART]

1. There have been conventionally proposed toilet devices such as portable toilet equipment and simple flush toilets. Toilet devices of this kind are used as ones suitable in an environment where sewerage cannot be used, such as in emerging countries and regions in which water infrastructure has not been improved yet.

Patent document 1, for example, discloses a simple flush toilet using an elastically deformable sealing cylinder. The sealing cylinder is provided immediately below the evacuation port of the toilet and has a structure for enabling opening and closing of the evacuation port by means of the weight of waste received in the sealing cylinder. Accordingly, backflow of odors from the toilet tank, located deeper than the evacuation port of the toilet, can be prevented.

### [PRIOR ART REFERENCE]

### [PATENT DOCUMENT]

[Patent Document 1] Japanese Examined Utility Model Application Publication No. 2-13588
[Patent Document 2] Japanese Unexamined Patent Application Publication No. 2011-050685

### [DISCLOSURE OF INVENTION]

### [PROBLEM(S) TO BE SOLVED BY THE INVENTION]

In an environment where portable toilet equipment and simple flush toilets are used, neither sewerage nor waterworks can be used in many cases. For favorable usability in such an environment, a structure for reducing the amount of flush water used to flush the toilet would be desirably proposed. From this perspective, any special devising is not provided in the toilet of Patent Document 1.

A first invention has been made in view of such a problem, and a purpose thereof is to provide a toilet suitable for use in an environment where waterworks cannot be used.

2. There has been also conventionally proposed a toilet device as described in Patent Document 2, for example. The toilet device is fixed to the floor or a wall of a toilet room.

Besides such fixed toilet devices fixed in toilet rooms, portable toilet equipment, which can be carried, is also known. The portable toilet equipment is used as equipment suitable in regions in which water infrastructure has not been improved yet, or facilities in which there are people in need of nursing care who have difficulty in moving to a toilet room, for example.

Such a toilet device as portable toilet equipment is used without being fixed in a toilet room, so that the entire toilet device is likely to move when a user sits on the toilet seat. Accordingly, since the user can hardly use the toilet while stably sitting, improvement therefor would be desired.

A second invention has been made in view of such a problem, and a purpose thereof is to provide a toilet seat on which a user can stably sit to use the toilet.

### [MEANS TO SOLVE THE PROBLEM(S)]

To solve the problem above, one embodiment of the first invention is a toilet. The toilet includes: a toilet bowl part with a waste discharge hole formed on its bottom part, and the toilet bowl part includes a waste leading part that receives waste and leads the waste to the waste discharge hole; and a valve structure capable of opening and closing the waste discharge hole, wherein the waste leading part has flexibility. The "object" includes waste and flush water.

According to the embodiment, even if waste stops in a portion of the inner surface of the waste leading part, when another waste is received thereafter in another portion of the inner surface of the waste leading part, flexural deformation of the another portion occurs, so that the portion also becomes more likely to be deformed accordingly. Therefore, the waste remaining in the portion of the waste leading part becomes more likely to move, so that the waste can be led to the bottom part of the toilet bowl part more easily. Accordingly, waste within the toilet bowl part is less likely to remain, thereby reducing the amount of flush water used to flush the inner surface of the toilet bowl part. Therefore, the toilet can be provided as a toilet suitable for use in an environment where water supply cannot be used.

Another embodiment of the first invention is a toilet device. The toilet device includes the toilet of the previously-described embodiment, and a support body that supports the toilet, wherein: the toilet includes a supported part provided on an outer peripheral side of the toilet bowl part; and the support body includes an opening part into which the toilet bowl part is inserted, a toilet receiving part that receives the supported part, and a storage part that stores waste discharged through the waste discharge hole.

To solve the problem above, one embodiment of the second invention is a toilet seat. The toilet seat includes: an upper surface part including an opening through which waste is made to pass, and an seating surface on which a user is to straddle to sit; and leg placement parts that are formed to extend downward from outer periphery parts on both the left and right sides of the upper surface part, and on which the both legs of a user are to be placed, respectively.

According to the embodiment, when straddling and sitting on the seating surface of the toilet seat, the user can hold the leg placement parts on the inner sides of the legs, with the soles rested on the floor. Accordingly, with the legs, the user can keep the direction around a vertical axis of the toilet device. Therefore, if the user can firmly place the soles on the floor and keep the positions of the legs, the entire of the toilet device will be less likely to move so as to sway around a vertical axis, so that the user can stably sit on the seating surface of the toilet seat to use the toilet.

Another embodiment of the second invention is a toilet device. The toilet device includes: a toilet that receives waste; a support body that supports the toilet; and the toilet seat of the previously-described embodiment supported by the support.

### [ADVANTAGEOUS EFFECTS OF INVENTION]

The first invention provides a toilet suitable for use in an environment where waterworks cannot be used.

The second invention provides a toilet seat on which a user can stably sit to use the toilet.

### [BRIEF DESCRIPTION OF DRAWINGS]

Embodiments will now be described, by way of example only, with reference to the accompanying drawings which are meant to be exemplary, not limiting, and wherein like elements are numbered alike in several Figures, in which:
Fig. 1 is a perspective view of a toilet device according to a first embodiment;
Fig. 2 is a side view of the toilet device according to the first embodiment;
Fig. 3 is an exploded view of the toilet device according to the first embodiment;
Fig. 4 is a diagram that shows an example of the state where the toilet device according to the first embodiment is used;
Fig. 5 is a sectional side view of the toilet device according to the first embodiment;
Fig. 6 is a sectional view taken along line A-A in Fig. 5;
Fig. 7 is a diagram of a toilet bowl part of the toilet according to the first embodiment, viewed obliquely from an upper side;
Fig. 8 is a diagram of the toilet bowl part of the toilet according to the first embodiment, viewed obliquely from a lower side;
Fig. 9 is a diagram in which the vicinity of a discharge passage part of the toilet according to the first embodiment is magnified;
Fig. 10A shows the state where excrement as waste is stored, and Fig. 10B shows the state where excrement and urine as waste are stored, within the toilet bowl part of the toilet according to the first embodiment;
Fig. 11 is a perspective view that shows the state where a toilet lid has been removed from the toilet device according to the first embodiment;
Fig. 12 is a side view that schematically shows a toilet bowl part of a toilet according to a second embodiment;
Fig. 13A is a sectional view taken along line B-B in Fig. 12, and Fig. 13B is a partially magnified view of Fig. 13A;
Fig. 14A shows the state where excrement as waste is stored, and Fig. 14B shows the state where excrement and urine as waste are stored, within the toilet bowl part of the toilet according to the second embodiment;
Fig. 15 is a perspective view that schematically shows a toilet bowl part of a toilet according to a third embodiment;
Fig. 16 is a front view that schematically shows the toilet bowl part of the toilet according to the third embodiment;
Fig. 17 is a plan view that schematically shows the toilet bowl part of the toilet according to the third embodiment;
Fig. 18 is a bottom view that schematically shows the toilet bowl part of the toilet according to the third embodiment;
Fig. 19A shows the state where excrement as waste is stored, and Fig. 19B shows the state where excrement and urine as waste are stored, within the toilet bowl part of the toilet according to the second embodiment; and
Fig. 20A is a front view that shows a configuration around a discharge passage part of a toilet according to a fifth embodiment, Fig. 20B is a side view thereof, and Fig. 20C is a sectional view taken along line C-C in Fig. 20A.

### [MODE FOR CARRYING OUT THE INVENTION]

In the following embodiments and modifications, like reference characters designate like constituent elements, and the same description thereof will be omitted. Also, part of the constituent elements may be omitted in each drawing, for the sake of convenience.

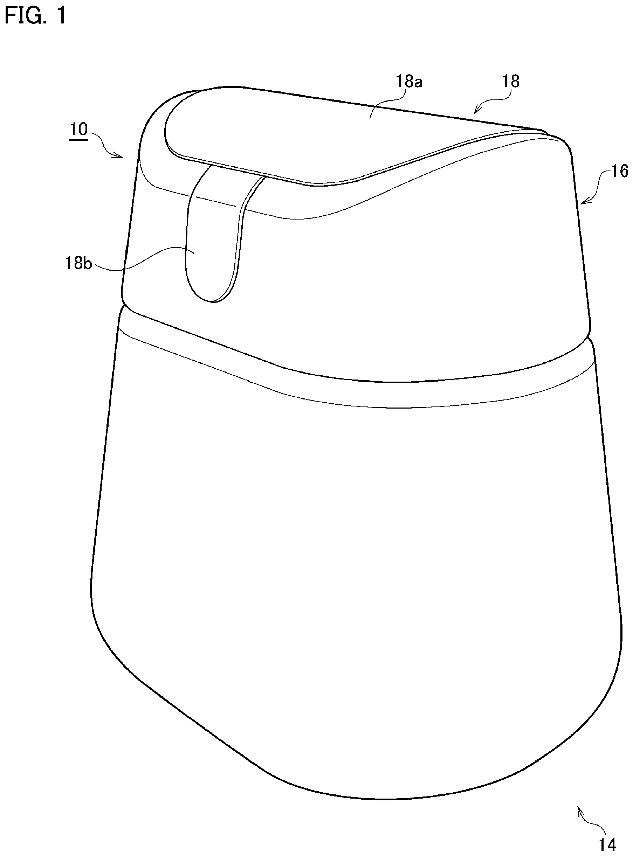

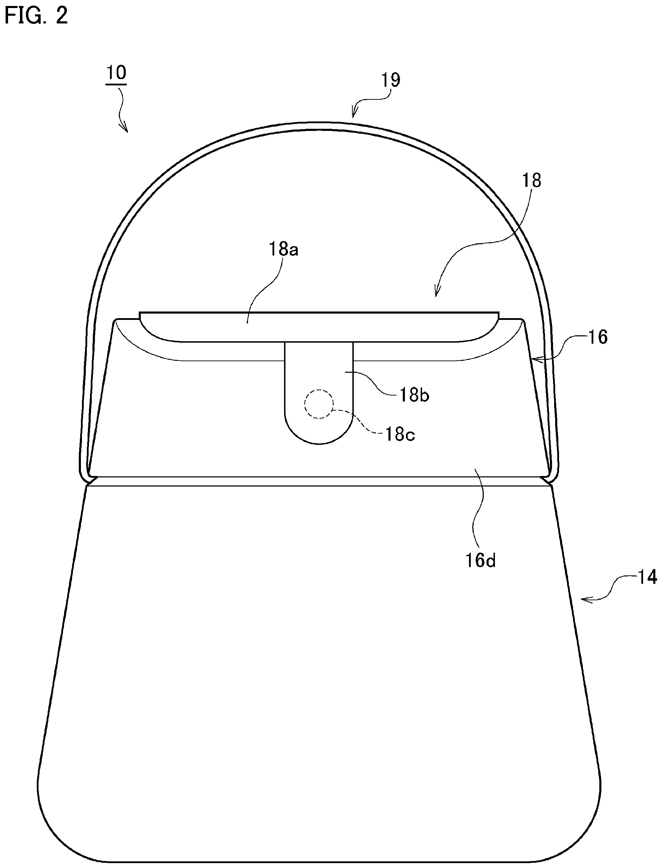

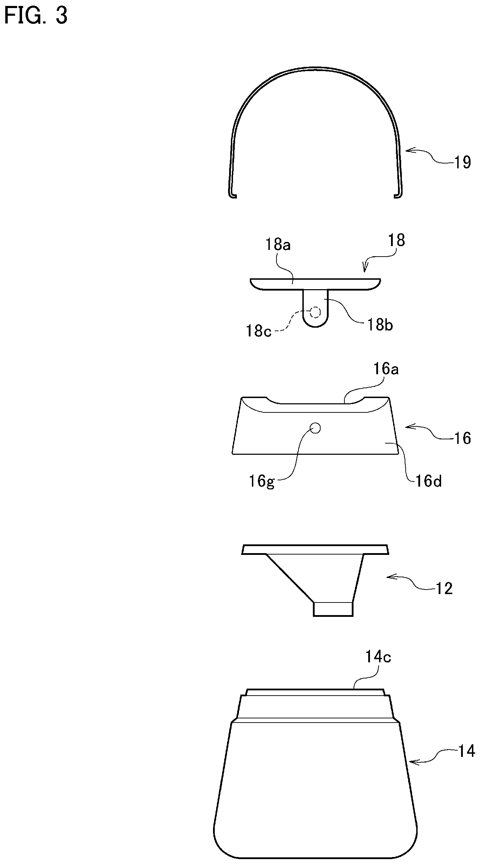

[First Embodiment] Fig. 1 is a perspective view of a toilet device 10 according to the first embodiment. Also, Fig. 2 is a side view of the toilet device 10, and Fig. 3 is an exploded view of the toilet device 10.

The toilet device 10 comprises a toilet 12 (see Fig. 3) that receives waste, a tank 14 that supports the toilet 12, a toilet seat 16 supported by the tank 14, and a toilet lid 18 that opens and closes an opening 16a (described later) of the toilet seat 16. The toilet device 10 is mobile toilet equipment of which the toilet 12, tank 14, toilet seat 16, and toilet lid 18 can be collectively carried. In order to facilitate the carrying, the toilet device 10 is provided with a handle 19 (not illustrated in Fig. 1) detachably attached to the tank 14.

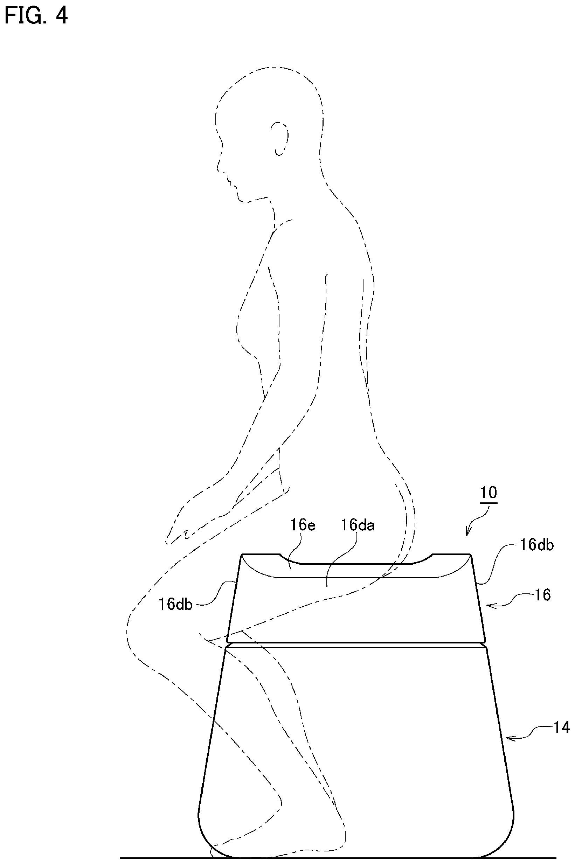

Fig. 4 is a diagram that shows an example of the state where the toilet device 10 is used.

The toilet device 10 is used in the state where the tank 14 is placed on the floor. A user sits on the toilet seat 16 to use the toilet. The waste of the user is received in the toilet 12 (not illustrated) and discharged through the toilet 12 into the tank 14 to be stored therein. Flush water is manually supplied by the user into the toilet 12. The user supplies flush water from a bottle or through a hose, for example, into the toilet 12, so as to flush the toilet 12. The waste includes both urine and excrement.

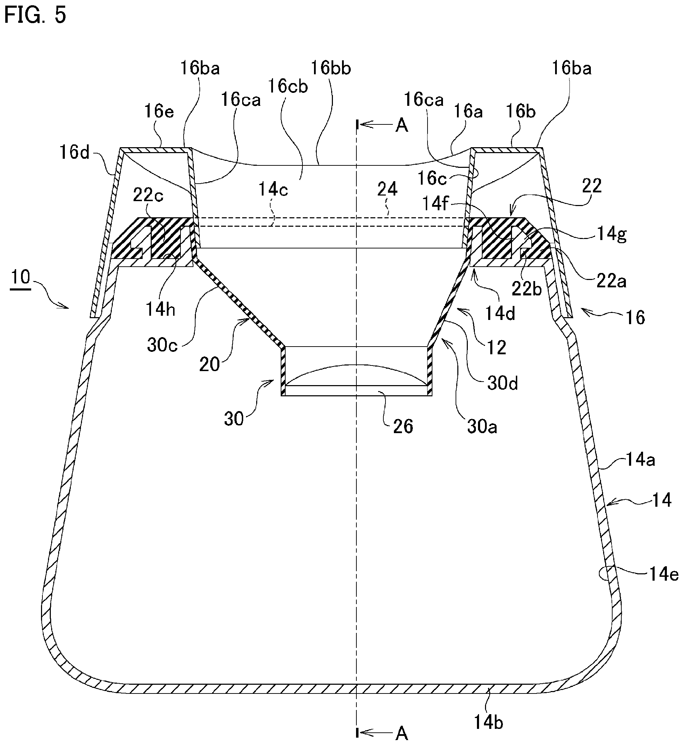

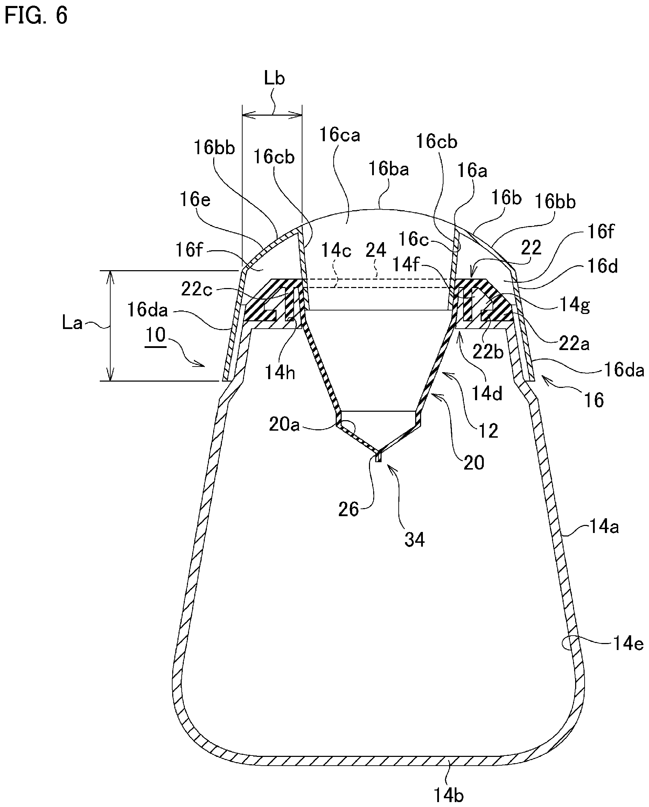

Fig. 5 is a sectional side view of the toilet device 10, and Fig. 6 is a sectional view taken along line A-A in Fig. 5.

The entire of the toilet 12 is integrally formed of a material having flexibility and stretching properties. In the present embodiment, silicon is used as a material having flexibility. Silicon is also a material having hydrophilic properties and durability to contamination by waste. As a method for integral forming, injection molding may be used, for example.

The toilet 12 includes a toilet bowl part 20 capable of receiving waste, and a supported part 22 provided on the outer peripheral side of the toilet bowl part 20. On an upper part of the toilet bowl part 20, a waste inlet port 24, into which waste of a user is brought, is formed, and, on a bottom part of the toilet bowl part 20, a waste discharge hole 26, through which waste is discharged, is formed. The supported part 22 is annularly formed to extend radially outward from an upper edge part of the toilet bowl part 20. Although one of the main features of the toilet device 10 resides in the toilet 12, the peripheral structure thereof will be described first.

The tank 14 is a bottomed cylindrical container including a trunk part 14a and a bottom part 14b. The tank 14 is formed of a material harder than the toilet 12. The material may be synthetic resin, such as polyethylene, for example.

The tank 14 also includes an opening part 14c (see Fig. 3) formed on the trunk part 14a to be opposite to the bottom part 14b (on the upper side in the figures). Into the opening part 14c, the toilet bowl part 20 of the toilet 12 is inserted from the upper side. The tank 14 also includes a toilet receiving part 14d formed to extend inward from an upper edge of the trunk part 14a. The toilet receiving part 14d constitutes a peripheral edge part of the opening part 14c in the tank 14 and has a function to receive the supported part 22 of the toilet 12. Since the supported part 22 is supported by the toilet receiving part 14d, the toilet bowl part 20 of the toilet 12 is supported not directly, but indirectly, by the tank 14. Namely, the toilet bowl part 20 is supported to be displaceable relative to the tank 14. Further, the tank 14 includes a storage part 14e for storing waste discharged through the waste discharge hole 26 of the toilet 12. The storage part 14e is formed within the tank 14.

As with the tank 14, the toilet seat 16 is formed of a material harder than the toilet 12. The toilet seat 16 includes an upper surface part 16b of a ring shape on which the opening 16a is formed to allow waste to pass therethrough, an inner peripheral surface part 16c of a cylindrical shape extending downward from an inner peripheral edge of the upper surface part 16b, and an outer peripheral surface part 16d of a cylindrical shape extending downward from an outer peripheral edge of the upper surface part 16b.

On the upper surface part 16b of the toilet seat 16 is formed a seating surface 16e on which a user sits. The seating surface 16e is formed to have an elliptical ring shape in plan view. The seating surface 16e is also formed to have a curved surface with an upward convex. On the upper surface part 16b of the toilet seat 16 is also formed a ribbed leg part 16f (see Fig. 6) protruding downward from the inner surface. The leg part 16f is mounted on the supported part 22 of the toilet 12, so that the toilet seat 16 is supported by the tank 14 via the toilet 12.

The inner peripheral surface part 16c of the toilet seat 16 is fitted into the upper edge part of the toilet bowl part 20 of the toilet 12, so as to be positioned in radial and circumferential directions of the toilet bowl part 20, with respect to the toilet 12. The outer peripheral surface part 16d of the toilet seat 16 is disposed so as to cover over the toilet receiving part 14d of the tank 14 from the outside in the radial direction.

As shown in Figs. 1 and 2, the toilet lid 18 is a sheet member and, as with the toilet 12, is integrally formed of a material having flexibility, such as silicon. The toilet lid 18 includes a lid part 18a that opens and closes the opening 16a (see Fig. 3) of the toilet seat 16, and two attachment parts 18b (only one attachment part is illustrated) of a tongue-like shape protruding from both side edge parts of the lid part 18a to the side.

The lid part 18a of the toilet lid 18 is disposed so as to cover over the opening 16a of the toilet seat 16 from the upper side. The lid part 18a is brought in close contact with the outer surface of the peripheral edge part of the opening 16a over the entire periphery so as to close the opening 16a. Although not illustrated, when the opening 16a is closed by the toilet lid 18, the entire toilet 12 and the toilet receiving part 14d of the tank 14 are covered over by the toilet lid 18 and the toilet seat 16.

As shown in Figs. 2 and 3, a first magnet 18c is attached to the inner surface of an attachment part 18b of the toilet lid 18, and a second magnet 16g is attached to the outer surface of the outer peripheral surface part 16d of the toilet seat 16. Each of the attachment parts 18b is detachably attached to the toilet seat 16 as the first magnet 18c and the second magnet 16g stick to each other by means of magnetic attraction.

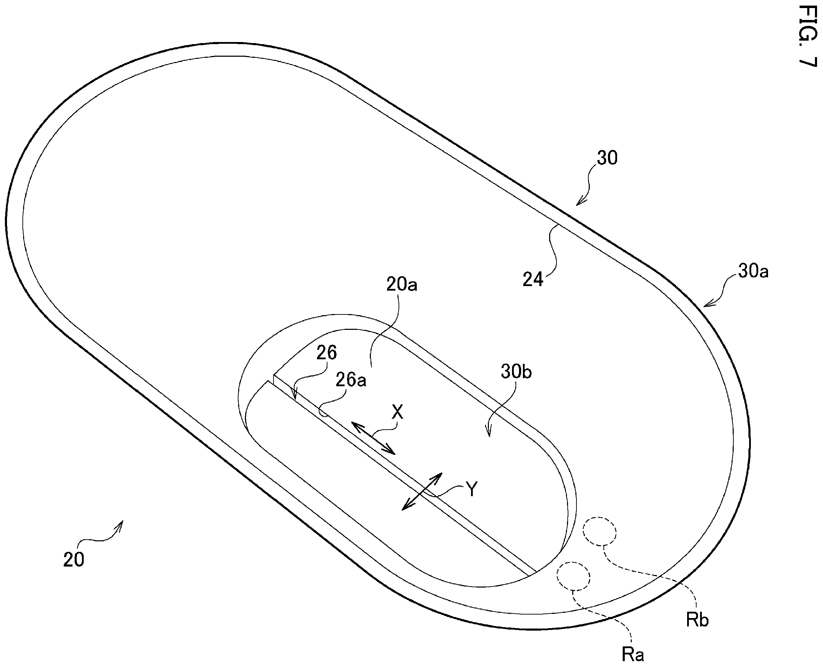

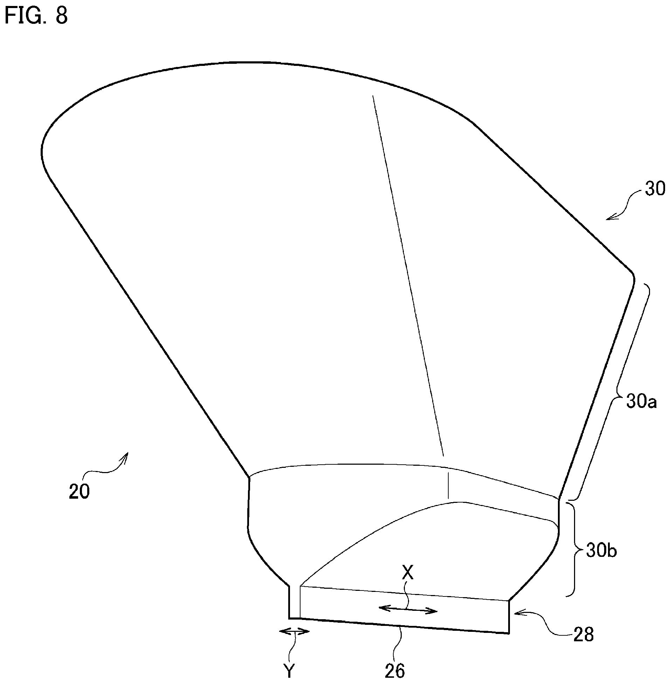

The description returns to the toilet 12. Fig. 7 is a diagram of the toilet bowl part 20 of the toilet 12 viewed obliquely from an upper side, and Fig. 8 is a diagram of the toilet bowl part 20 viewed obliquely from a lower side. Each of the drawings shows the toilet bowl part 20 of the toilet 12, omitting the supported part 22.

The toilet bowl part 20 of the toilet 12 includes a discharge passage part 28 in which the waste discharge hole 26 is formed, and a waste leading part 30 that receives waste and leads the waste to the waste discharge hole 26.

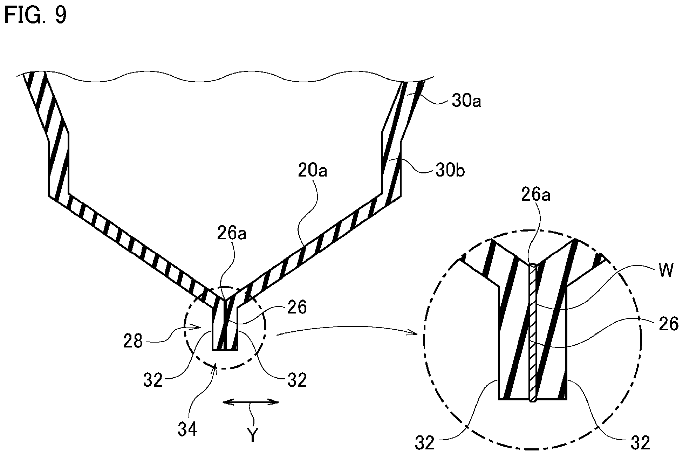

Fig. 9 is a diagram in which the vicinity of the discharge passage part 28 is magnified.

The discharge passage part 28 is constituted by a pair of seal wall parts 32 of which the inner surfaces are arranged to face each other in the lateral directions. The seal wall parts 32 are connected to each other at the both side ends, and the waste discharge hole 26 of a slit shape is formed between the seal wall parts 32. In the following, the longitudinal directions and the width directions of a transverse section of the waste discharge hole 26 will be referred to as longitudinal directions X and width directions Y, respectively.

As shown in Figs. 7 and 8, the waste leading part 30 has a shape that becomes narrower as approaching from the top toward the bottom side of the toilet bowl part 20. More specifically, the waste leading part 30 includes a first cylindrical portion 30a in which an upper opening constituting the waste inlet port 24 is formed, and a second cylindrical portion 30b connected to the lower edge of the first cylindrical portion 30a. The first cylindrical portion 30a is formed so that the inside dimensions thereof in a longitudinal direction X and a lateral direction (a direction parallel with a width direction Y in this example) of the waste discharge hole 26 become narrower as approaching toward the bottom side of the toilet bowl part 20. Also, the second cylindrical portion 30b is formed so that the inside dimension thereof in a lateral direction becomes narrower as approaching from a midway toward the bottom side of the toilet bowl part 20. An inner bottom surface 20a of the toilet bowl part 20 is formed by the inner surface of the second cylindrical portion 30b, and, on the inner bottom surface 20a, an inlet 26a of the waste discharge hole 26 opens. With such a shape of the waste leading part 30, when waste is received, the waste can be led to the waste discharge hole 26 by the waste's own weight or a flow of water. A flow of water here means that formed by flush water supplied through the waste inlet port 24, for example. From another perspective, it can be said that the waste leading part 30 includes multiple cylindrical portions 30a and 30b of which the states of narrowing as approaching from the top toward the bottom side are different.

As described previously, the entire of the toilet 12 including the waste leading part 30 is integrally formed of a material having flexibility and stretching properties. Accordingly, the seal wall parts 32 are elastically deformable in the width directions Y so that the inner surfaces thereof are brought into contact with each other and spaced away from each other, in other words, are contacted and separated with each other. Therefore, the waste discharge hole 26 between the seal wall parts 32 switches between an open state and a closed state. When the waste discharge hole 26 is in the closed state, a flow of air from the storage part 14e of the tank 14 (the lower side in the figures) toward the top side within the toilet bowl part 20 (the upper side in the figures) is blocked. Thus, the pair of the seal wall parts 32 constitute a valve structure 34 for opening and closing the waste discharge hole 26. As will be detailed later, the pair of the seal wall parts 32 are opened or closed by the weight of an object, including waste and flush water, stored within the bottom part of the toilet bowl part 20.

Placing the waste discharge hole 26 in the closed state can prevent odors of waste within the storage part 14e of the tank 14 from leaking to the outside through the waste discharge hole 26 of the toilet 12. Also, by placing the waste discharge hole 26 in the closed state, the inside of the storage part 14e, located deeper than the waste discharge hole 26, cannot be seen from the inside of the toilet 12, so that the user can comfortably use the toilet device 10.

When the seal wall parts 32 are brought into contact with each other, surface tension of water W, intervening between the inner surfaces of the seal wall parts 32, is used. The "water W" is urine as waste or flush water, for example. With the surface tension of the water W, the inner surfaces of the seal wall parts 32 are brought in close contact with each other, thereby placing the waste discharge hole 26 in the closed state.

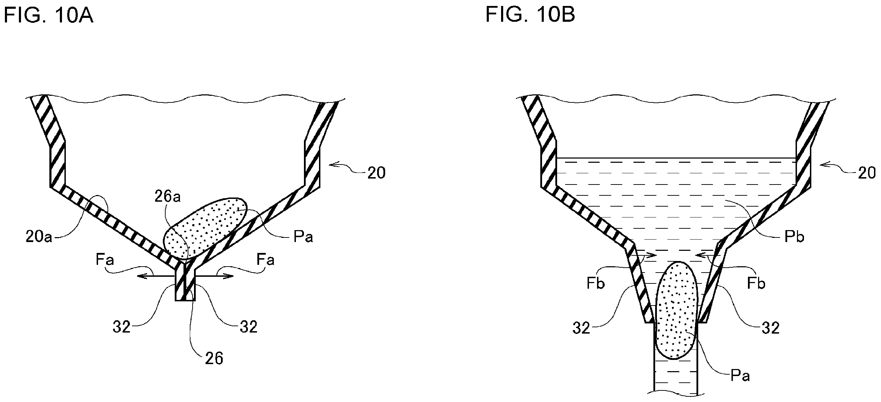

There will now be described the operations of the toilet 12 with reference to Figs. 6 and 10. Fig. 10A shows the state where excrement Pa as waste is stored, and Fig. 10B shows the state where the excrement Pa and urine Pb as waste are stored, within the bottom part of the toilet bowl part 20 of the toilet 12.

As shown in Figs. 6 and 10A, when waste is brought into the toilet bowl part 20 of the toilet 12 through the waste inlet port 24, the waste is led by its own weight or a flow of water to the vicinity of the inlet 26a of the waste discharge hole 26 in the bottom part of the toilet bowl part 20. When waste is stored on the inner bottom surface 20a of the toilet bowl part 20 around the inlet 26a, a pushing-out force Fa for pushing and opening the waste discharge hole 26 is applied by the weight of the waste to the pair of seal wall parts 32. The pushing-out force Fa increases as the waste stored within the bottom part of the toilet bowl part 20 increases. When the pushing-out force Fa increases, the pair of seal wall parts 32 are elastically deformed so as to widen the inner width dimension of the waste discharge hole 26, as shown in Fig. 10B. Accordingly, the waste discharge hole 26 is placed in the open state, so that the waste stored within the bottom part of the toilet bowl part 20 is discharged through the waste discharge hole 26.

To the pair of seal wall parts 32, a closing force Fb for closing the waste discharge hole 26 is applied by the surface tension of water between the seal wall parts 32 or elastic repulsion between them. When the waste within the bottom part of the toilet bowl part 20 is discharged, the closing force Fb narrows the inner width dimension of the waste discharge hole 26 to restore the shape of the pair of seal wall parts 32, so that the waste discharge hole 26 is placed in the closed state. In this way, the valve structure 34 constituted by the pair of seal wall parts 32 is capable of opening the waste discharge hole 26 by means of the weight of an object stored within the bottom part of the toilet bowl part 20.

When the toilet 12 is used as set forth above, if the weight of the waste is heavy enough, the pair of seal wall parts 32 can be opened by the weight of the waste alone so that the waste can be discharged. However, the weight of the waste is sometimes not heavy enough. In such a case, flush water may be supplied directly from a bottle or the like to discharge the waste. For the case where flush water is supplied to discharge the waste in this way, the pair of seal wall parts 32 may be configured to open when 50-100 grams of flush water is supplied, in order to reduce the use of flush water. Such configuration may be provided by adjusting the thickness or hardness of the seal wall parts 32, for example.

There will now be described the effects of the toilet 12 set forth above.

As described previously, since the waste leading part 30 has flexibility, the following advantages can be obtained. It is assumed here that waste brought into the waste leading part 30 cannot be led to the inlet 26a of the waste discharge hole 26 in the bottom part of the toilet bowl part 20 and stops in a halfway portion (the portion Ra in Fig. 7, for example) on the inner surface. Also in this case, according to the present embodiment, when another waste is received thereafter in another portion (the portion Rb in Fig. 7, for example) of the waste leading part 30, flexural deformation of the another portion Rb occurs, so that the portion Ra on which the waste remains also becomes more likely to be deformed accordingly. Therefore, the waste remaining in the portion Ra of the waste leading part 30 becomes more likely to move, so that the waste can be led to the bottom part of the toilet bowl part 20 more easily.

Even if excrement adheres to the inner surface of the waste leading part 30, when the waste leading part 30 is deformed so as to be pulled, the excrement becomes more likely to be peeled off from the adhesion position. Accordingly, also in this respect, the waste can be led to the bottom part of the toilet bowl part 20 more easily.

Also, since the waste leading part 30 has flexibility, when flush water or the like is brought into the toilet bowl part 20 to flush waste away, or when the user stands up from the toilet seat 16 of the toilet device 10, the entire of the toilet bowl part 20 including the waste leading part 30 can be shaken. Especially, since the toilet bowl part 20 is supported to be displaceable relative to the tank 14 and hanging down from the tank 14, the entire of the toilet bowl part 20 can be easily shaken. With such a shake, waste within the waste leading part 30 becomes more likely to move, so that, also in this respect, the waste can be led to the bottom part of the toilet bowl part 20 more easily.

As a result, waste within the toilet bowl part 20 can be discharged from the waste discharge hole 26 in the bottom part of the toilet bowl part 20 more easily.

Also, since waste can be thus led to the bottom part of the toilet bowl part 20 more easily, waste within the toilet bowl part 20 is less likely to remain, thereby reducing the amount of flush water used to flush the inner surface of the toilet bowl part 20. Therefore, the toilet 12 can be provided which is suitable for use in an environment where waterworks cannot be used.

Also, since the waste leading part 30 has flexibility, when waste, particularly urine, is received in the waste leading part 30, the waste is less likely to splash back. This prevents waste from splashing back to be scattered around or gotten on the user.

Also, since the valve structure 34 is constituted by the pair of seal wall parts 32 of which the inner surfaces are contacted and separated with each other so as to close and open the waste discharge hole 26, the valve structure 34 can be implemented by a simple structure, so that the manufacturing cost can be reduced.

Also, the pair of seal wall parts 32 are integrally formed with the waste leading part 30 of the toilet bowl part 20. Accordingly, the number of parts required to incorporate the valve structure 34 into the toilet bowl part 20 can be reduced, so that the manufacturing cost can be further reduced. Also, since the toilet bowl part 20 and the valve structure 34 are integrally configured and have no seam therebetween, waste is less likely to be accumulated, so that leakage of odors to the outside can be effectively prevented. Further, since the waste leading part 30 is likely to be deformed according to the movement of the opening and closing of the pair of seal wall parts 32, waste can be led to the bottom part of the toilet bowl part 20 more easily.

In the following, other features of the toilet device 10 will be described. With reference to Figs. 5 and 6, the contrivances to prevent leakage of odors from between the toilet bowl part 20 of the toilet 12 and the opening part 14c of the tank 14 will be mainly described.

The supported part 22 of the toilet 12 includes a first annular wall part 22a that protrudes from the outer peripheral end of the supported part 22 toward the toilet receiving part 14d of the tank 14, and a first annular click part 22b that protrudes from the tip part of the first annular wall part 22a toward the inner peripheral side as one side of radial direction. The supported part 22, first annular wall part 22a, and first annular click part 22b are integrally formed with the toilet bowl part 20 and have flexibility, similarly to the toilet bowl part 20.

The toilet receiving part 14d of the tank 14 includes a second annular wall part 14f that protrudes toward the supported part 22 of the toilet 12 and faces the inner peripheral side of the first annular wall part 22a of the toilet 12, and a second annular click part 14g that protrudes from the tip part of the second annular wall part 14f toward the outer peripheral side as the other side of radial direction. The first annular wall part 22a and first annular click part 22b of the toilet 12, and the second annular wall part 14f and second annular click part 14g of the tank 14 are formed so as to surround the opening part 14c of the tank 14.

The toilet 12 is detachably attached to the tank 14 by means of snap fitting using the first annular click part 22b and the second annular click part 14g. More specifically, the first annular wall part 22a and the first annular click part 22b of the toilet 12 are fitted to the outer peripheral side of the second annular wall part 14f and the second annular click part 14g of the tank 14. Accordingly, the first annular click part 22b of the toilet 12 and the second annular click part 14g of the tank 14 can be vertically engaged with each other. The engagement of the annular click parts 22b and 14g restrains displacement of the toilet bowl part 20 of the toilet 12 in the direction of coming out through the opening part 14c (hereinafter, referred to as the coming-out direction). Thus, the coming out of the toilet bowl part 20 through the opening part 14c is prevented, so that the toilet bowl part 20 can be attached to the tank 14.

The first annular wall part 22a of the toilet 12 and the second annular wall part 14f of the tank 14 are elastically deformable in the radial directions. Accordingly, when the toilet 12 is displaced in the coming-out direction, the annular wall parts 22a and 14f are elastically deformed so as to be distanced from each other in the radial directions. Consequently, the annular click parts 22b and 14g are disengaged from each other, so that the toilet 12 can be detached from the tank 14. In order to attach the toilet 12 to the tank 14, the toilet bowl part 20 of the toilet 12 is displaced in the direction of inserting it into the opening part 14c of the tank 14. Accordingly, the first annular click part 22b of the toilet 12 is elastically deformed to move outward in the radial direction and is displaced to a position at which the coming out of the toilet bowl part 20 can be prevented by the second annular click part 14g of the tank 14.

With the configuration set forth above, the structure becomes complicated around the engagement part between the first annular click part 22b of the toilet 12 and the second annular click part 14g of the tank 14. This prevents leakage of odors or waste from the opening part 14c of the tank 14 to the outside, through between the first annular click part 22b of the toilet 12 and the second annular click part 14g of the tank 14. Therefore, leakage of odors or waste from the toilet device 10 can be prevented, while the function to maintain the position of the toilet 12 with respect to the tank 14 is implemented.

The supported part 22 of the toilet 12 also includes a fitting projection part 22c that protrudes from the supported part 22 toward the toilet receiving part 14d, at the inner peripheral side of the first annular wall part 22a. Also, the toilet receiving part 14d of the tank 14 includes a fitting recess part 14h that is recessed in a direction away from the supported part 22 of the toilet 12 (downward), at the inner peripheral side of the second annular wall part 14f. The fitting projection part 22c of the toilet 12 is annularly formed so as to surround the opening part 14c of the tank 14. Also, the fitting recess part 14h of the tank 14 is formed in an annular groove shape so as to surround the opening part 14c of the tank 14.

The outer width dimension of the fitting projection part 22c of the toilet 12 is slightly larger than the inner width dimension of the fitting recess part 14h of the tank 14, so that the fitting projection part 22c is press-fitted into the fitting recess part 14h of the tank 14. When the toilet bowl part 20 of the toilet 12 is inserted into the opening part 14c of the tank 14, the fitting projection part 22c of the toilet 12 is press-fitted into the fitting recess part 14h of the tank 14. Accordingly, a surface of the fitting projection part 22c of the toilet 12 and a surface of the fitting recess part 14h of the tank 14, which face each other in radial directions, are brought in close contact with each other. More specifically, the outer peripheral surface of the fitting projection part 22c and the inner peripheral surface of the fitting recess part 14h are brought in close contact with each other, and the inner peripheral surface of the fitting projection part 22c and the outer peripheral surface of the fitting recess part 14h are also brought in close contact with each other. Namely, there are two close-contact parts between the fitting projection part 22c and the fitting recess part 14h.

With the configuration set forth above, leakage of odors or waste from the opening part 14c of the tank 14 to the outside through the close-contact parts can be prevented. Accordingly, leakage of odors from the storage part 14e of the toilet device 10 or leakage of waste in the case of tipping over the toilet device 10 can be prevented. Especially, in the present embodiment, since the fitting projection part 22c is press-fitted into the fitting recess part 14h formed in an annular groove shape, two close-contact parts are formed between the fitting projection part 22c and the fitting recess part 14h. Namely, the close-contact area between the fitting projection part 22c and the fitting recess part 14h becomes larger, thereby effectively preventing the leakage of odors and waste.

The features of the toilet device 10 including the toilet 12 and the toilet seat 16 will be further described.

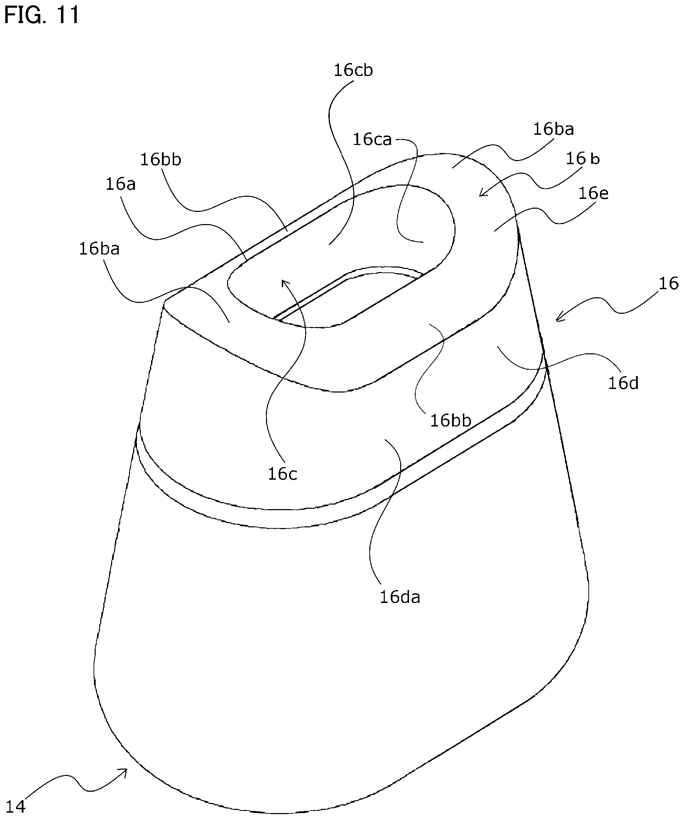

Fig. 11 is a perspective view that shows the state where the toilet lid 18 has been removed from the toilet device 10. Figs. 5, 6, and 11 will be referred to. As described previously, the toilet seat 16 includes the upper surface part 16b, inner peripheral surface part 16c, and outer peripheral surface part 16d. The upper surface part 16b, inner peripheral surface part 16c, and outer peripheral surface part 16d of the toilet seat 16 are integrally formed.

On the upper surface part 16b are formed the opening 16a through which waste passes, and the seating surface 16e on which a user straddles to sit. Although not illustrated, the upper surface part 16b is formed in an elliptical ring shape in plan view in which the dimension in one direction (a lateral direction in Fig. 5 and, hereinafter, referred to as a longitudinal direction) is longer than the dimension in the other direction perpendicular to the one direction (a lateral direction in Fig. 6 and, hereinafter, referred to as a lateral direction).

The upper surface part 16b is formed to have a curved surface with an upward convex. The upper surface part 16b is formed so that a gentle downward gradient from the center part toward each of the both outer sides in the lateral directions is provided on the seating surface 16e. Accordingly, the user can easily straddle and sit on the seating surface 16e, placing both the legs on the left and right sides of the toilet seat 16. In this respect, the upper surface part 16b has only to be formed to have an upward convex.

The inner peripheral surface part 16c is formed to extend downward from the inner peripheral edge, i.e., the inner periphery part of the upper surface part 16b and has a cylindrical shape. Also, the outer peripheral surface part 16d is formed to extend downward from the outer peripheral edge, i.e., the outer periphery part of the upper surface part 16b and has a cylindrical shape. Although not illustrated, each of the inner peripheral surface part 16c and outer peripheral surface part 16d is formed in an elliptical ring shape in plan view in which the dimension in a longitudinal direction is longer than the dimension in a lateral direction.

The aforementioned upper surface part 16b is formed so that surface portions 16bb on the both sides in a lateral direction are located lower than surface portions 16ba on the both sides in a longitudinal direction. Also, the upper edge part of the inner peripheral surface part 16c is formed so that surface portions 16cb on the both sides in a lateral direction are located lower than surface portions 16ca on the both sides in a longitudinal direction. Accordingly, when sitting on the seating surface 16e to use the toilet, the user can conceal the pubic part more easily with the inner peripheral surface part 16c, obtaining the effect of the so-called frontal concealing part.

As shown in Fig. 5, in the first cylindrical portion 30a of the waste leading part 30 of the toilet 12, the gradient of a front inner surface portion 30c, located on the front side in a longitudinal direction, is formed gentler than the gradient of a rear inner surface portion 30d, located on the rear side in a longitudinal direction. Accordingly, although not illustrated, the longitudinal dimension of the rear inner surface portion 30d is shorter than the longitudinal dimension of the front inner surface portion 30c in plan view in the waste leading part 30. As a result, when looking into the toilet bowl part 20 from the waste inlet port 24 side, the user can recognize the front side or the rear side by the difference in the longitudinal dimension, so that the user can easily sit on the toilet seat 16 facing the front, in the same direction in which the front side of the toilet bowl part 20 faces.

Surface portions 16ca located on the both sides of the inner peripheral surface part 16c in a longitudinal direction are positioned in front of the pubic part of the user when the user is sitting on the seating surface 16e to use the toilet. Such a surface part 16ca of the inner peripheral surface part 16c has a function to receive urine of the user. The urine received on the surface part 16ca of the inner peripheral surface part 16c falls into the toilet bowl part 20 of the toilet 12.

The inner peripheral surface part 16c is fitted into the upper edge part of the toilet bowl part 20 of the toilet 12. Accordingly, the lower edge part of the inner peripheral surface part 16c comes into contact with the upper edge part of the toilet bowl part 20 over the entire periphery so that they overlap each other in the radial directions. Therefore, a gap, through which waste can be leaked outward in the radial direction from the inside of the inner peripheral surface part 16c of the toilet seat 16, is not formed between the inner peripheral surface part 16c and the toilet 12, preventing contamination between the toilet seat 16 and the toilet 12.

As shown in Fig. 6, surface portions 16da located on the both sides of the outer peripheral surface part 16d in a lateral direction function as leg placement parts on which the user can place the legs (particularly the femoral regions thereof) when sitting on the seating surface 16e. When straddling and sitting on the seating surface 16e of the toilet seat 16, the user can hold the leg placement parts 16da of the outer peripheral surface part 16d on the inner sides of the legs (particularly the femoral regions thereof), with the soles rested on the floor (see Fig. 4). Accordingly, with the legs, the user can keep the direction of the toilet device 10 around a vertical axis. Therefore, if the user can firmly place the soles on the floor and keep the positions of the legs, the entire of the toilet device 10 will be less likely to move so as to sway around a vertical axis, so that the user can stably sit on the seating surface 16e of the toilet seat 16 to use the toilet. In order to obtain such an effect, the outer peripheral surface part 16d has only to include at least the leg placement parts 16da. Namely, surface portions 16db located on the both sides of the outer peripheral surface part 16d in a longitudinal direction need not necessarily be provided.

The leg placement parts 16da are formed so as to extend outward in the respective lateral directions as approaching the lower side. Accordingly, the user can easily place the legs and hence can firmly hold the leg placement parts 16da on the inner sides of the legs.

There will now be described an example of use of the toilet device 10 including the abovementioned toilet seat 16.

In the case of a conventional western-style toilet, a user first stands in front of the toilet device with the user's back to the toilet device. Thereafter, the user walks backward remaining in the state to get closer to the toilet device and sits on the toilet seat. In this way, in order to sit on the toilet seat, the user needs to walk backward.

In the case of the toilet device 10 according to the present embodiment, a user first stands in the rear of the toilet device 10 (on the right side in Fig. 4) with facing the user's front to the toilet device 10. Thereafter, the user walks forward (leftward in Fig. 4) to get closer to the toilet device 10, positions the legs so as to straddle the seating surface 16e of the toilet seat 16, and sits on the seating surface 16e of the toilet seat 16. In this way, in the case of the toilet device 10 according to the present embodiment, the user need not walk backward to sit on the toilet seat 16. At the time, the user is sitting while placing the user's legs on the leg placement parts 12da of the toilet seat 16, in a bestriding posture on the toilet seat 16. After the use, the user stands up from the seating surface 16e of the toilet device 10 and moves forward to step away from the toilet device 10.

In order to use the toilet device 10 in this way, the toilet seat 16 or the toilet device 10 is configured to have no interfering object in front of and in the rear of a user sitting on the seating surface 16e. From another perspective, the toilet seat 16 or the toilet device 10 is configured to have no interfering object so that the user can move both forward and backward after standing up from the seating surface 16e. The interfering object here means a portion protruding upward from the toilet seat 16 or the toilet device 10.

For the leg placement parts 16da described above, a height dimension La (the dimension along a vertical direction in Fig. 6) between the outer periphery of the upper surface part 16b and the lower end of a leg placement part 16da may be set to 10 centimeters or greater, for example. The upper limit of the height dimension La may be set so that the leg placement part 16da does not reach the floor, such as 50 centimeters or less. Also, the leg placement parts 16da are configured so that, in the example of Fig. 6, the height dimension La is longer than the lateral dimension Lb (the dimension along a lateral direction) of each of the surface portions 16bb located on the both sides of the upper surface part 16b in a lateral direction. Such configurations are provided so that the user can easily place the legs on the leg placement parts 16da.

Also, the tank 14 is formed in a trapezoidal shape that extends outward in the lateral directions and longitudinal directions as approaching the lower side. Accordingly, the tank 14 can be stably placed on the floor, so that the user can stably sit on the seating surface 16e of the toilet seat 16 supported by the tank 14. There is also the effect of allowing the user to hold the tank 14 on the legs more easily.

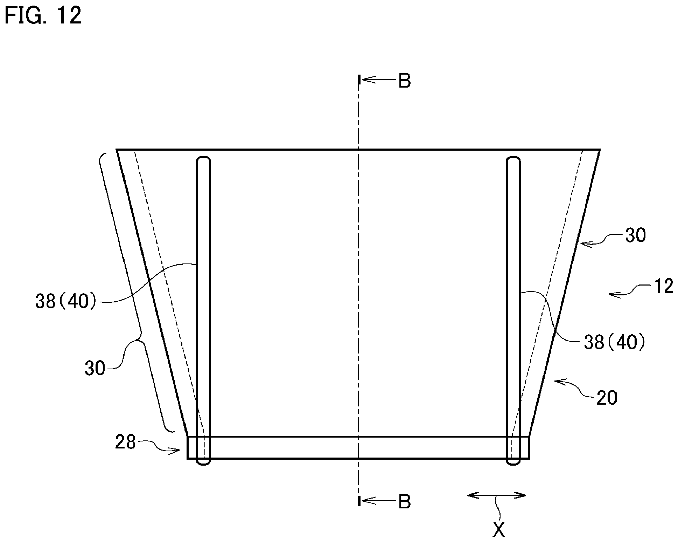

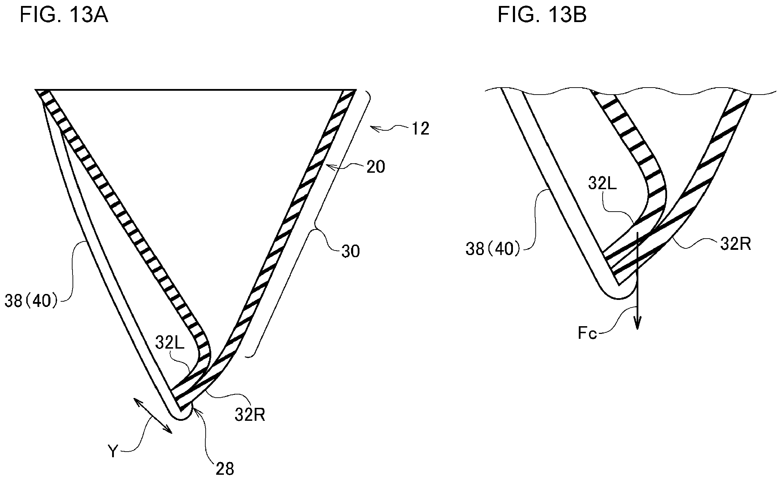

[Second Embodiment] Fig. 12 is a side view that schematically shows the toilet 12 according to the second embodiment, Fig. 13A is a sectional view taken along line B-B in Fig. 12, and Fig. 13B is a partially magnified view of Fig. 13A. Each of the drawings shows the toilet bowl part 20 of the toilet 12, omitting the supported part 22. In the following, the seal wall part 32 on the left side (one seal wall part) of the pair of seal wall parts 32 in Figs. 13 will be referred to as a left seal wall part 32L, and the seal wall part 32 on the right side (the other seal wall part) will be referred to as a right seal wall part 32R.

The toilet 12 differs from that in the example shown in Figs. 5 and 6 mainly in the shape of the toilet bowl part 20, and a lifting member 38 for lifting the pair of seal wall parts 32. The waste leading part 30 of the toilet bowl part 20 includes the first cylindrical portion 30a in which an upper opening constituting the waste inlet port 24 is formed. As with in the example of Figs. 5 and 6, the first cylindrical portion 30a is formed so that the inside dimensions thereof in a longitudinal direction X and a lateral direction of the waste discharge hole 26 become narrower as approaching the bottom side of the toilet bowl part 20. The inner bottom surface 20a of the toilet bowl part 20 is formed by the inner surface of the first cylindrical portion 30a, and, on the inner bottom surface 20a, the inlet 26a of the waste discharge hole 26 opens.

The lifting member 38 is a string-shaped member, and multiple lifting members 38 are arranged at intervals in a longitudinal direction X on a side of the toilet bowl part 20 of the toilet 12. The lifting members 38 are formed of an elastically deformable material. The material may be silicon, for example. Each of the lifting members 38 is connected to the lower end of the right seal wall part 32R at one end, and to the outer periphery of the waste leading part 30 at the other end. The lifting members 38 are connected to the toilet bowl part 20 by thermal welding or the like. Accordingly, the lifting members 38 support so as to lift the right seal wall part 32R together with the left seal wall part 32L.

One end of each of the lifting members 38 is connected to a position at which interference with waste discharged from the waste discharge hole 26 can be avoided. More specifically, one end of a lifting member 38 is connected to one end of the discharge passage part 28 in a longitudinal direction X, and one end of another lifting member 38 is connected to the other end of the discharge passage part 28.

To the lifting members 38, tension caused by the weight of the seal wall parts 32 is applied, and each of the lifting members 38 holds the seal wall parts 32 at a position where the tension and elastic repulsion acting on the lifting member 38 is in balance with each other. Accordingly, the pair of seal wall parts 32 are held in the state where the right seal wall part 32R is surmounted by the left seal wall part 32L. Hereinafter, the position of the pair of seal wall parts 32 in this state will be referred to as the initial position. It can be said that the lifting members 38 constitute a position maintaining structure 40 that holds the pair of seal wall parts 32 at the initial position.

When the pair of seal wall parts 32 are held at the initial position, a force Fc in the vertically downward direction, applied to the left seal wall part 32L positioned superiorly by its own weight, acts on the pair of seal wall parts 32, as a closing force for closing the seal wall parts 32. Also, since the left seal wall part 32L positioned superiorly is bent by its own weight, the left seal wall part 32L is likely to come into contact with the right seal wall part 32R positioned inferiorly. By the combination of these features, the pair of seal wall parts 32 can be stably maintained in the closed state.

When the pair of seal wall parts 32 are in the closed state, the pair of seal wall parts 32 have a two-dimensional planar structure, whereas the top side portion (waste leading part 30) of the toilet bowl part 20, extending continuously with the pair of seal wall parts 32, has a three-dimensional container-like structure. Accordingly, when the top side portion of the toilet bowl part 20 is three-dimensionally distorted, a pushing-out force for moving the pair of seal wall parts 32 away from each other in the width directions Y is applied to the pair of seal wall parts 32, so that the waste discharge hole 26 between the seal wall parts 32 may be placed in the open state by the pushing-out force. However, the toilet 12 of the present embodiment has the advantage that, even if such a pushing-out force is applied, the pair of seal wall parts 32 can be stably maintained in the closed state by the closing force Fc caused by the own weight of the left seal wall part 32L, as described previously.

As the position maintaining structure 40 for holding the pair of seal wall parts 32 at the initial position, there can be considered a structure in which the right seal wall part 32R positioned inferiorly is made to have higher rigidity relative to the left seal wall part 32L positioned superiorly, for example. This structure can be obtained by making the right seal wall part 32R positioned inferiorly thicker than the seal wall part 32L positioned superiorly, or by providing a reinforcement part, such as ribs, only in the right seal wall part 32R. For the position maintaining structure 40 of this kind, the structure of the pair of seal wall parts 32 needs to be complicated. According to the present embodiment, however, the position maintaining structure 40 can be implemented by the lifting members 38, without complicating the structure of the pair of seal wall parts 32. Therefore, with the simplified structure of the pair of seal wall parts 32, the manufacturing cost can be reduced.

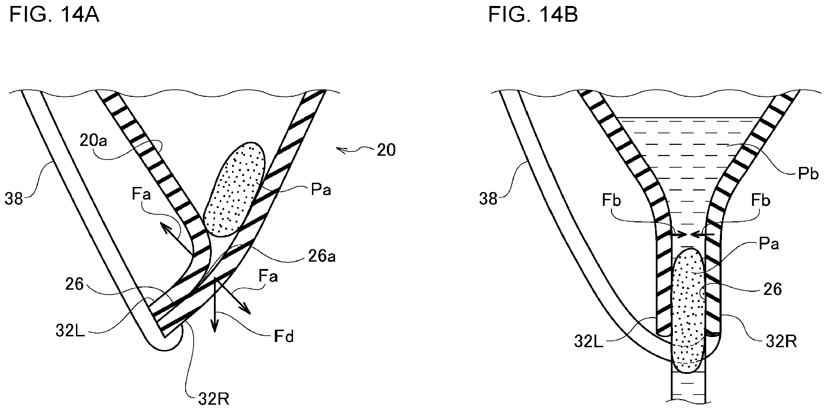

There will now be described the operations of the toilet 12 with reference to Figs. 14. Fig. 14A shows the state where excrement Pa as waste is stored, and Fig. 14B shows the state where the excrement Pa and urine Pb as waste are stored, within the bottom part of the toilet bowl part 20 of the toilet 12.

It is assumed here that waste is received on the inner bottom surface 20a around the inlet 26a of the waste discharge hole 26 located in the bottom part of the toilet bowl part 20, as shown in Fig. 14A. When waste is stored in the bottom part of the toilet bowl part 20, the pushing-out force Fa for pushing and moving the pair of seal wall parts 32 away from each other is applied to the pair of seal wall parts 32. The pushing-out force Fa includes a force Fd, which is a vertically downward component. By the downward force Fd, the pair of seal wall parts 32 are elastically deformed so that the lower ends thereof are directed from the initial position toward the vertically downward direction, as shown in Fig. 14B. Consequently, the pair of seal wall parts 32 place the waste discharge hole 26 in the open state, and the direction of the lower ends of the pair of seal wall parts 32 is changed from the initial position to get closer to the vertically downward direction.

When the pair of seal wall parts 32 are placed in the open state, they are elastically deformed against the tension of the lifting members 38. Each of the lifting members 38 is elastically deformed so as to stretch in the longitudinal direction, following the elastic deformation of the pair of seal wall parts 32.

When the waste within the bottom part of the toilet bowl part 20 is discharged, the closing force Fb for closing the waste discharge hole 26 narrows the inner width dimension of the waste discharge hole 26 to restore the shape of the pair of seal wall parts 32, so that the waste discharge hole 26 is placed in the closed state. Accordingly, the shape of the pair of seal wall parts 32 is restored by elastic repulsion of each of the lifting members 38 in the longitudinal direction in which the lifting member 38 shrinks, so that the pair of seal wall parts 32 return to the initial position.

Thus, the pair of seal wall parts 32 are elastically deformable so as to be directed from the initial position toward the vertically downward direction. As the direction of the lower ends of the pair of seal wall parts 32 are closer to the vertically downward direction, the pair of seal wall parts 32 provide less resistance when waste passes through the waste discharge hole 26 therebetween, so that more waste can be promptly discharged through the waste discharge hole 26.

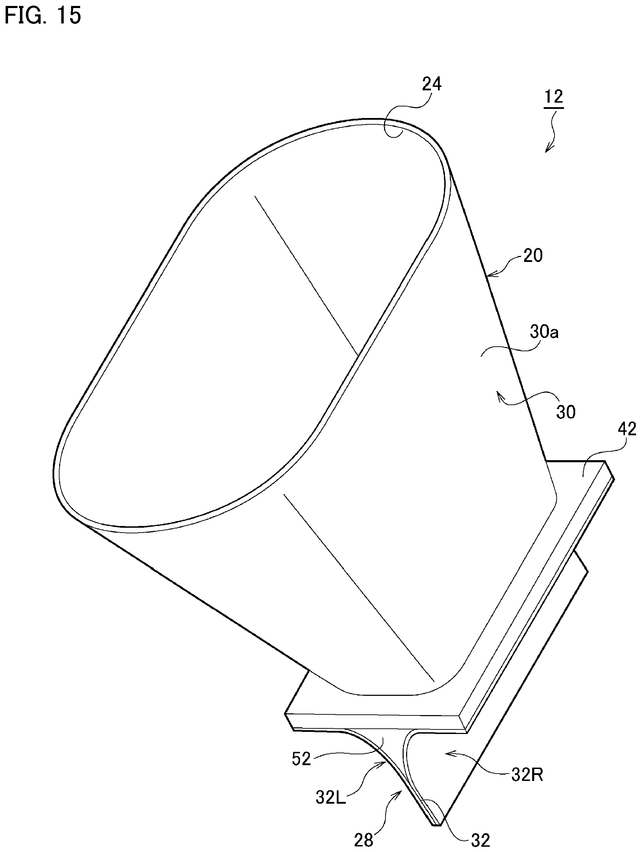

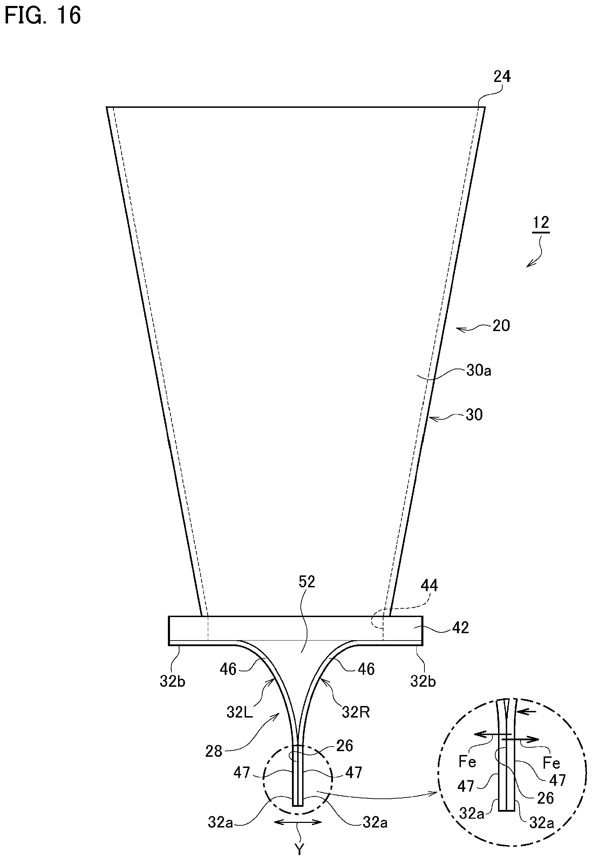

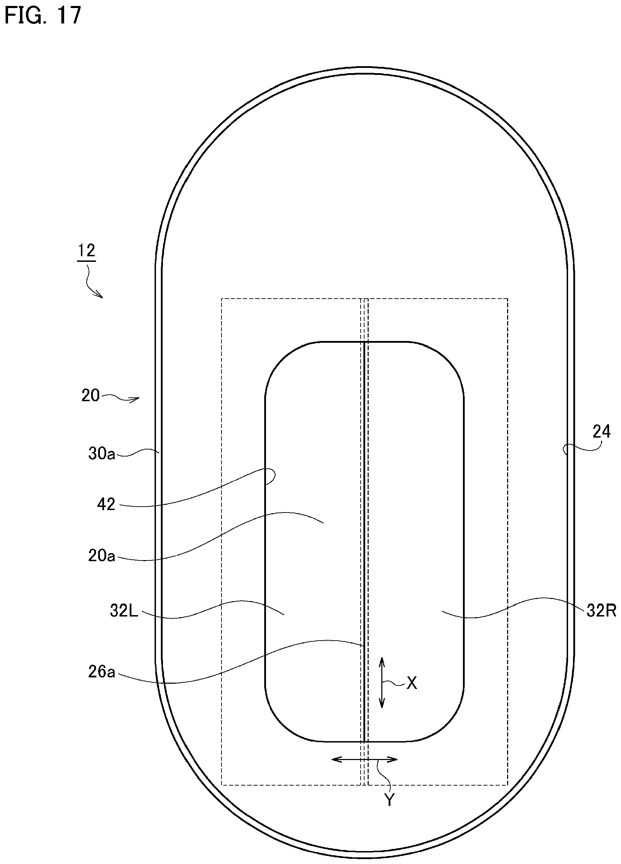

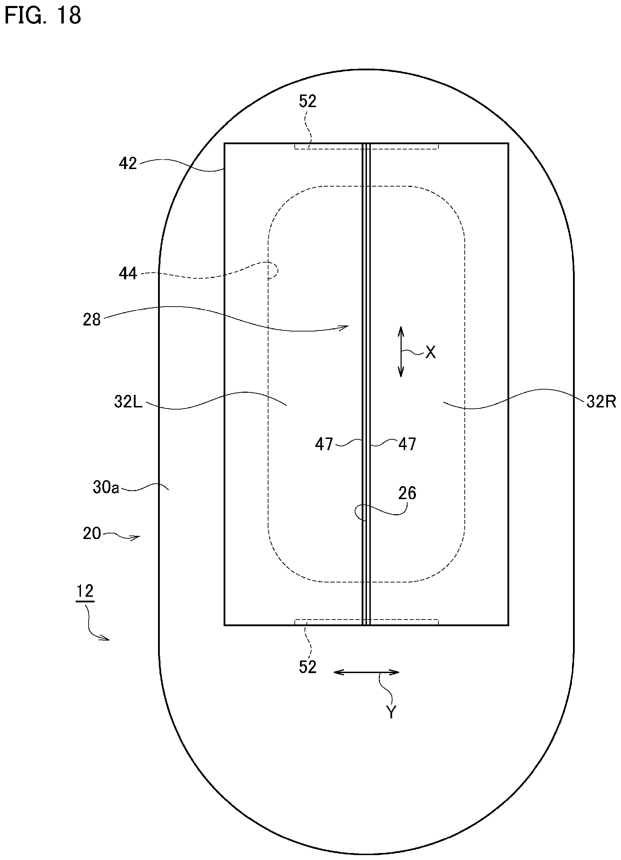

[Third Embodiment] Fig. 15 is a perspective view that schematically shows the toilet bowl part 20 of the toilet 12 according to the third embodiment, and Fig. 16 is a front view of the toilet bowl part 20, Fig. 17 is a plan view thereof, and Fig. 18 is a bottom view thereof. Each of the drawings shows the toilet bowl part 20 of the toilet 12, omitting the supported part 22.

The toilet bowl part 20 of the toilet 12 differs from that in the example shown in Figs. 5 and 6 mainly in that the toilet bowl part 20 comprises a connection part 42 besides the discharge passage part 28 and the waste leading part 30, and in that the pair of seal wall parts 32 constituting the discharge passage part 28 are formed separately from the waste leading part 30.

More specifically, the toilet bowl part 20 includes the discharge passage part 28 in which the waste discharge hole 26 is formed, the waste leading part 30 that receives waste and leads the waste to the waste discharge hole 26, and the connection part 42 that connects the discharge passage part 28 and the waste leading part 30. The discharge passage part 28 is constituted by the pair of seal wall parts 32, which are constituted by elastic sheet members formed separately from the waste leading part 30.

The waste leading part 30 includes the first cylindrical portion 30a in which an upper opening constituting the waste inlet port 24 is formed. As with in the example of Figs. 5 and 6, the first cylindrical portion 30a is formed so that the inside dimensions thereof in a longitudinal direction X and a lateral direction (a direction parallel with a width direction Y in this example) of the waste discharge hole 26 become narrower as approaching the bottom side of the toilet bowl part 20, as shown in Figs. 16 and 17.

As shown in Figs. 15 and 16, the connection part 42 is a plate member in which a through hole 44 pierced in a vertical direction is formed. The connection part 42 is disposed so that the upper surface thereof faces the lower edge part of the waste leading part 30, and the facing position is connected by bonding or the like. The inside of the through hole 44 in the connection part 42 communicates with the inside of the waste leading part 30, and their inner surfaces form the inner surface of the toilet bowl part 20. The lower opening of the through hole 44 in the connection part 42 is closed by the pair of seal wall parts 32, as shown in Figs. 17 and 18. The inner bottom surface 20a of the toilet bowl part 20 is formed by the inner surfaces of the pair of seal wall parts 32, and, on the inner bottom surface 20a, the inlet 26a of the waste discharge hole 26 opens.

There has been described an example with reference to Fig. 9 in which the pair of seal wall parts 32 are connected to each other at the both side ends. However, the pair of seal wall parts 32 according to the present embodiment are constituted by separate sheet members, as shown in Figs. 16 and 18. The pair of seal wall parts 32 may be constituted by the same member, as described in the example of Fig. 9, or may be constituted by separate members, as described in the present embodiment. As shown in Fig. 16, each of the pair of seal wall parts 32 includes a first side edge portion 32a provided at one end side in an in-plane direction thereof (the lower end side in the seal wall part 32R, and the lower end side in the seal wall part 32L), and a second side edge portion 32b provided at the other end side in the in-plane direction thereof (the right end side in the seal wall part 32R, and the left end side in the seal wall part 32L). Namely, the first side edge portion 32a is a portion provided along one side of a rectangle sheet member, and the second side edge portion 32b is a portion provided along another side, opposite to the one side, of the sheet member.

The first side edge portions 32a of the pair of seal wall parts 32 are arranged so that the inner surfaces thereof face each other in the lateral directions and form the waste discharge hole 26 therebetween. The waste discharge hole 26 is closed or opened when the inner surfaces of the first side edge portions 32a of the pair of seal wall parts 32 are contacted and separated with each other. The inner surface of each of the second side edge portions 32b of the pair of seal wall parts 32 faces the connection part 42 in a vertical direction and is attached to the connection part 42 by bonding or the like. Between the first side edge portion 32a and the second side edge portion 32b of each of the pair of seal wall parts 32, a bent portion 46 is provided. The bent portion 46 is formed to curve so as to form a convex inward of the toilet bowl part 20, and the inner surface of the bent portion 46 forms the inner bottom surface 20a of the toilet bowl part 20 (see Fig. 17).

Each of the pair of seal wall parts 32 includes a contact/separation portion 47, and the contact/separation portions 47 are contacted and separated with each other so as to close and open the waste discharge hole 26. The contact/separation portion 47 is part of the first side edge portion 32a. To the contact/separation portions 47 of the seal wall parts 32, elastic repulsion Fe, by which the contact/separation portions 47 push each other, is applied by the bending deformation of the bent portions 46. Accordingly, to the pair of seal wall parts 32, a closing force for closing the waste discharge hole 26 is continuously applied by the elastic repulsion Fe, besides the surface tension of water between the seal wall parts 32. Therefore, the pair of seal wall parts 32 can be stably maintained in the closed state.

Also, on the lower surface of the connection part 42, lid parts 52 are provided to cover openings formed between the bent portions 46 of the pair of seal wall parts 32. Each of the lid parts 52 is a sheet member formed separately from the connection part 42. The lid parts 52 have flexibility, similarly to the pair of seal wall parts 32, and are connected to the lower surface of the connection part 42 by bonding or the like. The pair of seal wall parts 32 are provided so that they can be contacted and separated with respect to the lid parts 52.

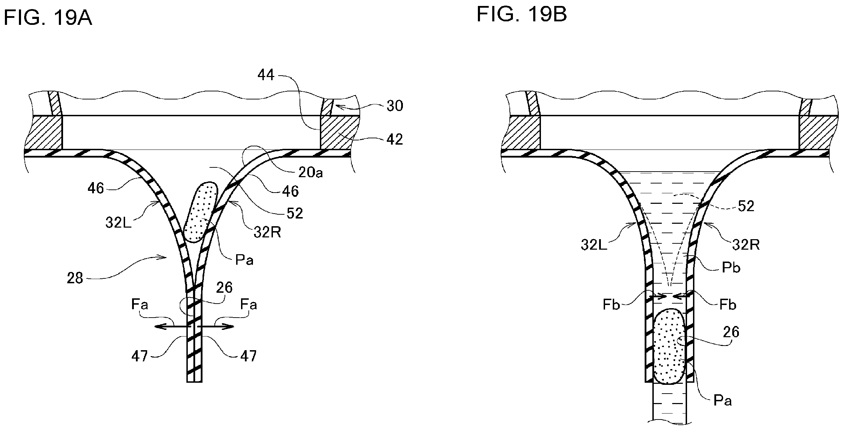

There will now be described the operations of the toilet bowl part 20 of the toilet 12 with reference to Fig. 19. Fig. 19A shows the state where excrement Pa as waste is stored, and Fig. 19B shows the state where the excrement Pa and urine Pb as waste are stored, within the bottom part of the toilet bowl part 20 of the toilet 12.

As shown in Fig.19A, it is assumed here that waste is stored on the inner bottom surface 20a around the inlet 26a of the waste discharge hole 26 located in the bottom part of the toilet bowl part 20. In this case, as with in the example of Figs. 10, the pushing-out force Fa for pushing and opening the waste discharge hole 26 is applied by the weight of the waste to the pair of seal wall parts 32. When the pushing-out force Fa increases, the pair of seal wall parts 32 are elastically deformed so as to widen the inner width dimension of the waste discharge hole 26, as shown in Fig. 19B, so that the waste discharge hole 26 is placed in the open state. When the waste within the bottom part of the toilet bowl part 20 is discharged, the closing force Fb, applied to the pair of seal wall parts 32, restores the shape of the pair of seal wall parts 32, so that the waste discharge hole 26 is placed in the closed state, in the same way as described in the example of Figs. 10.

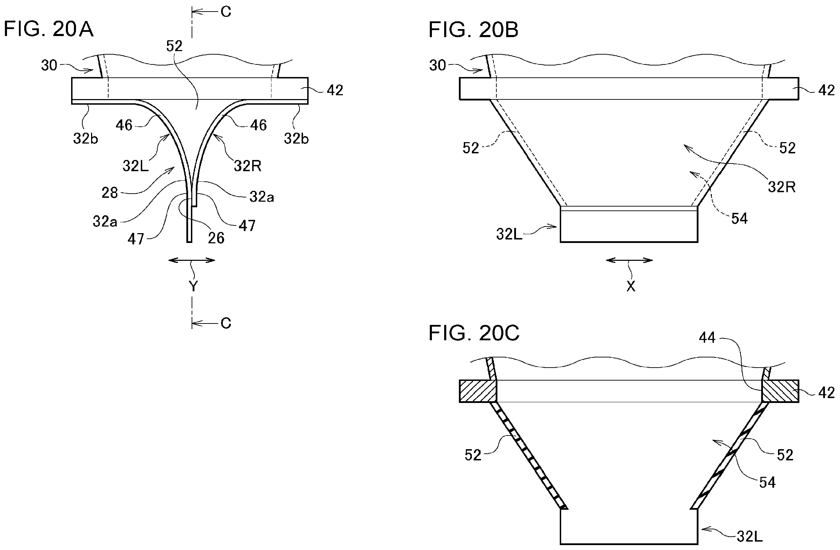

[Fourth Embodiment] Fig. 20A is a front view that shows a configuration around the discharge passage part 28 of the toilet 12 according to the fourth embodiment, Fig. 20B is a side view thereof, and Fig. 20C is a sectional view taken along line C-C in Fig. 20A. The toilet 12 of the present embodiment differs from the toilet 12 of the example shown in Fig. 16 in the discharge passage part 28.

More specifically, the discharge passage part 28 includes the pair of seal wall parts 32L and 32R, of which the inner surfaces face each other in the lateral directions and the waste discharge hole 26 of a slit shape is formed between the inner surfaces, and the lid parts 52 that cover a space 54 between the pair of seal wall parts 32L and 32R from the both sides of a longitudinal direction X, respectively. The pair of seal wall parts 32L and 32R are constituted by separate sheet members. The waste discharge hole 26 is formed between the first side edge portions 32a of the pair of seal wall parts 32. The waste discharge hole 26 is closed and opened when parts of the pair of seal wall parts 32 are contacted and separated with each other. The pair of seal wall parts 32 are formed so that the distance between the inner surfaces thereof becomes longer in the lateral directions (parallel with the directions Y in the drawings) as approaching the upper side from the contact/separation portions 47. Accordingly, the space 54 is formed above the contact/separation portions 47 of the pair of seal wall parts 32. Also, the lid parts 52 are formed so that the distance between the inner surfaces thereof becomes longer in the longitudinal directions X as approaching the upper side from the contact/separation portions 47 of the pair of seal wall parts 32. Accordingly, the inner passage of the discharge passage part 28 has a bowl-like shape that becomes narrower in the longitudinal directions X and the lateral directions as approaching the lower side.

Since the pair of seal wall parts 32 in the present embodiment are constituted by separate sheet members, the pair of seal wall parts 32 are able to move largely without restraining each other's movement. Accordingly, the degree of opening of the pair of seal wall parts 32 can be made greater, enabling early discharge of a large amount of waste. Even with such a structure, since the lid parts 52 cover the space between the pair of seal wall parts 32, odors of waste within the storage part 14e of the tank 14 are prevented from entering the toilet bowl part 20 through the space between the pair of seal wall parts 32. The effects described in this paragraph can also be obtained with the toilet 12 according to the fourth embodiment.

The inner passage of the discharge passage part 28 has a shape that becomes narrower in the longitudinal directions X and the lateral directions as approaching the lower side. Accordingly, since waste is led to the inner side in the lateral directions as well as to the inner side in the longitudinal directions X, the waste can be collected more easily within a small area on the inner bottom surface 20a of the toilet bowl part 20. As a result, the pushing-out force Fa can be applied to a small area of the pair of seal wall parts 32, so that the pair of seal wall parts 32 can be opened more easily, thereby facilitating the discharge of waste.

There has been described an example with reference to Fig. 16 in which the first side edge portions 32a of the seal wall parts 32 are formed to have the same vertical dimension. In the present embodiment, however, the first side edge portion 32a of the left seal wall part 32L is formed to be longer in vertical dimension than the first side edge portion 32a of the right seal wall part 32R. Accordingly, the first side edge portion 32a of the left seal wall part 32L is formed to extend to a position lower than the lower end of the first side edge portion 32a of the right seal wall part 32R.

As a result of experimental study, the inventors have found that, with such different vertical dimensions, the seal wall parts 32 can be placed in the closed state more easily, and, in addition, waste can be discharged more easily. Although the mechanism thereof has not become clear, the following reasons may be given. When the vertical dimensions of the seal wall parts 32 are different, the lower end of the seal wall part 32R, having the smaller vertical dimension, is more likely to touch the inner surface of the seal wall part 32L having the larger vertical dimension. At this time, since the contact area between the seal wall parts is smaller than that when the inner surfaces of the seal wall parts 32 are in surface-contact with each other, the elastic repulsion Fe is locally and intensively applied, so that the lower end of the seal wall part 32R becomes more likely to stop in the state of being caught on the inner surface of the seal wall part 32L. Accordingly, it is considered that the inner surfaces of the seal wall parts 32 are less likely to move away from each other in the lateral directions, so that the seal wall parts 32 can be placed in the closed state more easily.

Also, when the vertical dimensions of the seal wall parts 32 are different, the length of the contact/separation portions 47 of the seal wall parts 32 becomes shorter, compared to the case where the vertical dimensions are the same. The case where the vertical dimensions are the same is considered to be the situation where the vertical dimensions are set so that the lower end position of the right seal wall part 32 is the same as that of the left seal wall part 32 in Figs. 20. Accordingly, it is considered that the surface tension of water applied to the contact/separation portions 47 of the seal wall parts 32 becomes weaker, so that the contact/separation portions 47 of the seal wall parts 32 can be opened more easily, thereby facilitating the discharge of waste.

When the pair of seal wall parts 32 are deformed in this way, the lid parts 52 are also deformed according thereto. Also, the lower ends of the pair of seal wall parts 32 may be formed to extend parallel with a longitudinal direction (depth direction in the drawing), or the lower end of one of or each of the seal wall parts 32 may be formed to extend to be inclined with respect to the longitudinal direction.

The present invention has been described with reference to embodiments, which merely describe principles and applications of the present invention. Also, various modifications or changes in arrangement may be made to the embodiments without departing from the scope of ideas of the invention defined in claims.

The first embodiment describes an example in which the valve structure 34 is implemented by the pair of seal wall parts 32, which are part of the toilet bowl part 20 of the toilet 12. Alternatively, the valve structure 34 may be implemented by a flapper valve or the like attached to the bottom part of the toilet bowl part 20 of the toilet 12.

Although the example has been described in which the material of the waste leading part 30 and the seal wall parts 32 of the toilet 12 is silicon, the material has only to have flexibility and may be fluororesin, olefin resin, nitrile rubber, or synthetic resin, such as ethylene propylene, for example. Also, the waste leading part 30 and the seal wall parts 32 of the toilet 12 need not necessarily have stretching properties. The same applies to the toilet lid 18.

Also, the waste leading part 30 and the pair of seal wall parts 32 of the toilet bowl part 20 have only to have flexibility sufficient for their flexural deformation caused by waste received in the waste leading part 30 and the seal wall parts 32. For such a degree of flexibility, only part of the waste leading part 30 and the seal wall parts 32, instead of the entirety thereof, may be formed of a material having flexibility.

In the first embodiment, the tank 14 is described as an example of the support body for supporting the toilet 12. However, the support body need not necessarily be an object like the tank 14 that can be collectively carried with the toilet 12. For example, the support body may be a fixed structure, such as a floor for a vault toilet. Also, although the first embodiment describes the example in which the trunk part 14a, the bottom part 14b, and the storage part 14e of the tank 14 are constituted by the same member, they may also be constituted by separate members.

The first embodiment describes the example in which the toilet lid 18 is detachably attached to the toilet seat 16. The toilet lid 18 may also be detachably attached to the tank 14, instead of the toilet seat 16. Also, in the example, multiple magnets are used as the attachment structure used to attach the toilet lid 18 to the toilet seat 16 or tank 14. For simplified configuration, such multiple magnets may be preferably used, but a hinge structure or a screw structure may also be used as the attachment structure.

The first embodiment describes the example in which the supported part 22 of the toilet 12 includes the first annular wall part 22a and the first annular click part 22b, and the toilet receiving part 14d of the tank 14 includes the second annular wall part 14f and the second annular click part 14g. However, in order to prevent the leakage of odors or waste from the toilet device 10 while implementing the function to maintain the position of the toilet 12 with respect to the tank 14, only one of the supported part 22 of the toilet 12 and the toilet bowl receiving part of the support body may include an annular wall part protruding toward the other, and an annular click part protruding in one side of radial direction of the annular wall part. In this case, the annular click part of one of the supported part 22 of the toilet 12 and the toilet bowl receiving part of the support body has only to be engaged with part of the other so as to prevent the toilet bowl part 20 from coming out through the opening part 14c, and the engagement position is not particularly limited.

The first embodiment describes the example in which the supported part 22 of the toilet 12 includes the fitting projection part 22c, and the toilet receiving part 14d of the tank 14 includes the fitting recess part 14h. Alternatively, the fitting projection part 22c may be included in the toilet receiving part of the support body (tank) rather than the toilet 12, and the fitting recess part 14h may be included in the supported part 22 of the toilet 12 rather than the support body. Namely, one of the supported part of the toilet bowl and the toilet receiving part of the support body may include the fitting projection part 22c while the other thereof includes the fitting recess part 14h. Although the fitting recess part 14h is formed in an annular groove shape in the example, it may be formed as a simple recess rather than a groove shape.

The first embodiment describes the example in which the inner peripheral surface part 16c of the toilet seat 16 is fitted into the toilet bowl part 20 of the toilet 12, so as to be positioned with respect to the toilet 12. Alternatively, the supported part 22 as part of the toilet 12, or part of the support body (tank 14) may be fitted into the outer peripheral surface part 16d of the toilet seat 16 so that the toilet seat 16 is positioned with respect to the toilet 12.

The first embodiment describes the example in which the upper surface part 16b of the toilet seat 16 is formed to have an elliptical ring shape in plan view. However, the upper surface part 16b has only to have a ring shape, and the specific shape is not limited to the shape described in the example. For example, it may be an oval ring shape, or may be a rectangular ring shape with rounded corners. The same applies to the upper surface part of the toilet 12. Although the first embodiment describes the example in which the upper surface part 16b of the toilet seat 16 is formed so that a downward gradient from the center part toward each of the both outer sides in the lateral directions is provided on the seating surface, an upward gradient may be provided on the seating surface, or no gradient may be provided thereon.

The second embodiment describes an example in which the lifting member 38 is connected to a seal wall part 32 at one end, and to the outer periphery of the waste leading part 30 at the other end. Alternatively, the other end may be connected to the supported part 22, rather than the toilet bowl part 20 of the toilet 12, or may be connected the support body (tank) or the toilet seat 16 rather than the toilet 12.

When the waste leading part 30 is formed separately from the pair of seal wall parts 32 (valve structure 34) in the toilet 12, as described in the third and fourth embodiments, the waste leading part 30 of the toilet 12 need not necessarily have flexibility and may be formed of a hard material, such as pottery and resin. In this case, the pair of seal wall parts 32 (valve structure 34) are attached to the bottom part of the waste leading part 30 of the toilet 12.

Although not described in each embodiment, on the back side of the toilet lid 18, an attaching part may be provided to detachably attach an odor inhibitor, such as a fragrance and deodorizer. Accordingly, diffusion of uncomfortable odors can be prevented when the toilet lid 18 is opened. The attaching part may be formed in a pocket-like shape or may be configured to be fitted to a part for holding an odor inhibitor, on the back side of the toilet lid 18.

Although not described in each embodiment, in the toilet 12, the pair of seal wall parts 32 (valve structure 34) may be configured to have no flexibility while the waste leading part 30 is configured to have flexibility.

When the inventions embodied by the embodiments and modifications set forth above are generalized, the following technical ideas are derived.

In the toilet of an embodiment described previously in MEANS TO SOLVE THE PROBLEM(S), the valve structure may be constituted by a pair of seal wall parts of which the inner surfaces are arranged to face each other and are contacted and separated with each other so as to close and open the waste discharge hole.

According to the embodiment, the valve structure can be implemented by a simple structure, so that the manufacturing cost can be reduced.

In the toilet of the embodiment described previously, the pair of seal wall parts may be integrally formed with the waste leading part.

According to the embodiment, the number of parts required to incorporate the valve structure into the toilet bowl part can be reduced, so that the manufacturing cost can be further reduced.

In the toilet of the embodiment described previously, a position maintaining structure may be provided to maintain the state in which one seal wall part of the pair of seal wall parts is surmounted by the other seal wall part.

According to the embodiment, a force in the vertically downward direction, applied by the own weight of the seal wall part positioned superiorly, acts as a closing force for closing the seal wall parts. Therefore, the pair of seal wall parts can be stably maintained in the closed state.

In the toilet of the embodiment described previously, when the waste discharge hole is opened, the pair of seal wall parts may be elastically deformed so that the lower ends thereof are directed from an initial position, in which the one seal wall part is surmounted by the other seal wall part, toward the vertically downward direction.

According to the embodiment, as the direction of the lower ends of the pair of seal wall parts are closer to the vertically downward direction, the pair of seal wall parts provide less resistance when waste passes through the waste discharge hole therebetween, so that more waste can be promptly discharged through the waste discharge hole.

In the toilet of the embodiment described previously, the position maintaining structure may be a lifting member that lifts the pair of seal wall parts so as to maintain the state in which the one seal wall part is surmounted by the other seal wall part.

According to the embodiment, the position maintaining structure can be implemented by the lifting member, without complicating the structure of the pair of seal wall parts. Therefore, with the simplified structure of the pair of seal wall parts, the manufacturing cost can be reduced.

In the toilet of the embodiment described previously, to contact/separation portions of the pair of seal wall parts, elastic repulsion, by which the contact/separation portions push each other, may be applied.

According to the embodiment, a closing force for closing the waste discharge hole is continuously applied to the pair of seal wall parts. Therefore, the pair of seal wall parts can be stably maintained in the closed state.

In the toilet device of an embodiment described previously, one of the supported part and the toilet receiving part may include an annular wall part protruding toward the other thereof, and an annular click part protruding in one radial direction of the annular wall part, and the annular click part may be engaged with part of the other of the supported part and the toilet receiving part so as to prevent the toilet bowl part from coming out through the opening part.

According to the embodiment, the structure becomes complicated around the engagement part between the annular click part of one of the supported part and the toilet receiving part, and the other thereof. Therefore, leakage of odors from the opening part of the support body to the outside through the engagement part can be prevented.

In the toilet device of the embodiment described previously, one of the supported part and the toilet receiving part may include a fitting projection part formed annularly, and the other of the supported part and the toilet receiving part may include a fitting recess part into which the fitting projection part is press-fitted.

According to the embodiment, a surface of the fitting projection part and a surface of the fitting recess part, which face each other, are brought in close contact with each other, so that leakage of odors from the opening part of the support to the outside through the close-contact part can be prevented.

In the toilet device of the embodiment described previously, the fitting recess part may be formed in an annular groove shape.

According to the embodiment, the close-contact area between the fitting projection part and the fitting recess part becomes larger, so that leakage of odors from the opening part of the support to the outside through the close-contact part can be effectively prevented.

In the toilet seat of an embodiment described previously in MEANS TO SOLVE THE PROBLEM(S), the leg placement parts may be formed so as to extend outward in the respective lateral directions as approaching a lower side.

According to the embodiment, the user can easily place the legs and hence can firmly hold the leg placement parts on the inner sides of the legs.

In the toilet seat of the embodiment described previously, an inner peripheral surface part, formed to extend downward from an inner periphery of the upper surface part, may be provided.

According to the embodiment, surface portions located on the both sides of the inner peripheral surface part in a longitudinal direction can be provided with a function to receive urine of a user.

In the toilet seat of the embodiment described previously, the lower edge part of the inner peripheral surface part may be fitted into the upper edge part of the toilet bowl part of the toilet.

According to the embodiment, a gap, through which waste can be leaked outward in the radial direction from the inside of the inner peripheral surface part of the toilet seat, is not formed between the inner peripheral surface part of the toilet seat and the toilet, preventing contamination between the toilet seat and the toilet.

In the toilet seat of the embodiment described previously, the upper surface part may be formed so that a downward gradient from the center part toward each of the both outer sides in the lateral directions is provided on the seating surface.

According to the embodiment, the user can easily straddle and sit on the seating surface, placing both the legs on the left and right sides of the toilet seat.

Also, when the inventions embodied by the embodiments and modifications set forth above are generalized, it can be said that the invention described in the following item is included.

(First Item) A valve structure body comprising a pair of seal wall parts constituted by separate sheet members, the pair of seal wall parts including: first side edge portions of which the inner surfaces are arranged to face each other in the lateral directions and are contacted and separated with each other so as to close and open a hole formed between the inner surfaces; and second side edge portions each provided opposite to the corresponding first side edge portion in an in-plane direction and attached to an external member with its inner surface facing the external member in a vertical direction, wherein
the first side edge portion of one seal wall part of the pair of seal wall parts is formed to extend to a position lower than the lower end of the first side edge portion of the other seal wall part.

The "valve structure body" means the valve structure 34 including the pair of seal wall parts 32L and 32R in Figs. 20, and the "external member" means the connection part 42. The valve structure body may be attached in advance or may be attached later to a portion (the connection part 42) constituting the bottom part of the toilet bowl part 20 of the toilet 12, as described in each embodiment. Also, the "separate" means the state in which the pair of seal wall parts are not connected to each other by sewing or the like and are spaced away from each other without being in contact with each other.

The problem related to the invention described in the present item is as follows.

As a result of study of the structure described in the aforementioned Patent Document 1, the inventors have recognized that there is room for further improvement in order to facilitate discharge of waste using a valve structure that can be opened and closed by the weight of waste. The invention described in the present item provides a valve structure body that can be stably maintained in the closed state more easily.

Also, when the inventions embodied by the embodiments and modifications set forth above are generalized, it can be said that the invention described in the following item is also included.

### (Second Item)

A toilet, comprising:
a toilet bowl part with a waste discharge hole of a slit shape formed on a bottom part thereof;
a pair of seal wall parts, constituted by separate sheet members, of which the inner surfaces are arranged to face each other in the lateral directions and are contacted and separated with each other so as to close and open the waste discharge hole formed between the inner surfaces; and
lid parts that cover a space between the pair of seal wall parts from the both sides of a longitudinal direction of the waste discharge hole respectively, wherein
an inner passage formed inside the pair of seal wall parts and the lid parts has a shape that becomes narrower in the longitudinal directions and the lateral directions as approaching a lower side.

The problem related to the invention described in the present item is as follows.

As a result of study of the structure described in the aforementioned Patent Document 1, the inventors have recognized that there is room for further improvement in order to facilitate the discharge of waste using a valve structure that can be opened and closed by the weight of waste. The invention described in the present item provides a toilet including a valve structure for facilitating the discharge of waste.

### [EXPLANATION OF REFERENCE NUMERALS]

10 toilet device
12 toilet
14c opening part
14d toilet receiving part
14e storage part
14f second annular wall part
14g second annular click part
14h fitting recess part
20 toilet bowl part
22 supported part
22a first annular wall part
22b first annular click part
22c fitting projection part
26 waste discharge hole
30 waste leading part
32 seal wall parts
34 valve structure
38 lifting member
40 position maintaining structure

### [INDUSTRIAL APPLICABILITY]

The present invention relates to a toilet, a toilet seat, and a toilet device.

## Claims

1. A toilet, comprising:
a toilet bowl part with a waste discharge hole formed on a bottom part thereof, the toilet bowl part including a waste leading part that receives waste and leads the waste to the waste discharge hole; and
a valve structure capable of opening and closing the waste discharge hole, wherein
the waste leading part has flexibility.

2. The toilet of claim 1, wherein the valve structure is constituted by a pair of seal wall parts of which the inner surfaces are arranged to face each other and are contacted and separated with each other so as to close and open the waste discharge hole.

3. The toilet of claim 2, wherein the pair of seal wall parts are integrally formed with the waste leading part.

4. The toilet of claim 2 or 3, further comprising a position maintaining structure that maintains the state in which one seal wall part of the pair of seal wall parts is surmounted by the other seal wall part.

5. The toilet of claim 4, wherein, when the waste discharge hole is opened, the pair of seal wall parts are elastically deformed so that the lower ends thereof are directed from an initial position, in which the one seal wall part is surmounted by the other seal wall part, toward the vertically downward direction.

6. The toilet of claim 4 or 5, wherein the position maintaining structure is a lifting member that lifts the pair of seal wall parts so as to maintain the state in which the one seal wall part is surmounted by the other seal wall part.

7. The toilet of any one of claims 2 through 6, wherein, to contact/separation portions of the pair of seal wall parts, elastic repulsion, by which the contact/separation portions push each other, is applied.

8. A toilet device, comprising:
the toilet of any one of claims 1 through 7; and
a support body that supports the toilet, wherein:
the toilet includes a supported part provided on an outer peripheral side of the toilet bowl part; and
the support body includes an opening part into which the toilet bowl part is inserted, and a toilet receiving part that receives the supported part.

9. The toilet device of claim 8, wherein:
one of the supported part and the toilet receiving part includes an annular wall part protruding toward the other thereof, and an annular click part protruding in one side of radial direction of the annular wall part; and
the annular click part is engaged with part of the other of the supported part and the toilet receiving part so as to prevent the toilet bowl part from coming out through the opening part.

10. The toilet device of claim 8 or 9, wherein:
one of the supported part and the toilet receiving part includes a fitting projection part formed annularly; and
the other of the supported part and the toilet receiving part includes a fitting recess part into which the fitting projection part is press-fitted.

11. The toilet device of claim 10, wherein the fitting recess part is formed in an annular groove shape.

12. A toilet seat, comprising:
an upper surface part including an opening through which waste is made to pass, and an seating surface on which a user is to straddle to sit; and
leg placement parts that are formed to extend downward from outer periphery parts on both the left and right sides of the upper surface part, and on which the both legs of a user are to be placed, respectively.

13. The toilet seat of claim 12, wherein the leg placement parts are formed so as to extend outward in the respective lateral directions as approaching a lower side.

14. The toilet seat of claim 12 or 13, further comprising an inner peripheral surface part formed to extend downward from an inner periphery of the upper surface part.

15. The toilet seat of claim 14, wherein a lower edge part of the inner peripheral surface part can be fitted into an upper edge part of a toilet bowl part of a toilet.

16. A toilet device, comprising:
a toilet that receives waste;
a support body that supports the toilet; and
the toilet seat of any one of claims 12 through 15 supported by the support body.
